# EUROPEAN PATENT APPLICATION

(11) **EP 4 782 341 A1**
(43) Date of publication of application: **29.07.2026**
(21) Application number: 25153655.3
(22) Date of filing: 23.01.2025
(51) Int. Cl.: B64F 5/60, B29C 70/88, G01N 27/82, G01M 5/00, B64C 1/00, B64D 45/00

(54) **OUTER SKIN OF AN AIRCRAFT FUSELAGE OR AIRCRAFT FUSELAGE SECTION AND METHOD FOR MONITORING THE STRUCTURAL INTEGRITY OF THE OUTER SKIN OF AN AIRCRAFT FUSELAGE OR FUSELAGE SECTION**

(71) Applicant: AIRBUS Operations GmbH, 21129 Hamburg (DE)
(72) Inventor: HEGENBART, Matthias, 21129 Hamburg (DE); LINDE, Peter, 21129 Hamburg (DE)
(74) Representative: Isarpatent

(57) **Abstract**

The present invention provides an outer skin of an aircraft fuselage or aircraft fuselage section formed from a fibre reinforced plastic, in particular carbon fibre reinforced plastics (CFRP) in a layered configuration, comprising at least two layers (105a, b) having electrically conductive fibres (400), in particular carbon fibres, placed with alternating fibre orientations within the layers (105a, b) and embedded in a polymer matrix material, and a coating (100) consisting of or comprising magnetically active particles (101) configured to induce a change in physical properties of the coating (100) when exposed to a magnetic field (300), a method for monitoring the structural integrity of the outer skin of an aircraft fuselage or fuselage section and an aircraft having a fuselage or fuselage section provided with such an outer skin.

## Description

The present invention pertains to an outer skin of an aircraft fuselage or aircraft fuselage section, a method for monitoring the structural integrity of said outer skin of an aircraft fuselage or fuselage section and an aircraft having such fuselage or fuselage section.

Although it can be used in many applications, the present invention and the problems underlying it are explained in greater detail in relation to aircraft. However, the devices and method described can likewise be used in vehicles in all sectors of the transport industry, e. g. for space launch vehicles, road vehicles, for rail vehicles or for watercraft or for stationary installations or parts thereof.

The structural integrity of aircraft fuselages is of crucial importance for the operational safety and longevity of aircraft. In particular, in the case of lightweight constructions made of carbon-fibre-reinforced plastics (CFRP) material fatigue, microcracks, delamination of CFRP layers or other structural damage need to be detected at an early stage. Existing methods for the monitoring of structural integrity, also referred to as structural health monitoring (SHM), are based on sensor, acoustic emission, ultrasonic, or optical testing and use elaborate sensor technology, extensive cabling or external testing procedures and devices. Such monitoring systems are often difficult to integrate into the aircraft structure and require additional installations and are subject to inspection and maintenance downtimes.

Against this background, it is an object of the present invention to find a system and method for monitoring the structural integrity of the outer skin of an aircraft fuselage or sections thereof that enables early and precise information on the structural integrity over the entire area of the aircraft fuselage in a simple and easy to implement manner.

This object is achieved by an outer skin of an aircraft fuselage or fuselage section having the features of claim 1, a method for monitoring the structural integrity of the outer skin of an aircraft fuselage or fuselage section having the features of claim 8, a use of a coating in an aircraft fuselage or fuselage section according to claim 14 and an aircraft according to claim 15.

According to a first aspect of the invention, an outer skin of an aircraft fuselage or aircraft fuselage section formed from a fibre reinforced plastics, in particular carbon fibre reinforced plastics (CFRP), in a layered configuration is provided. The outer skin therein comprises at least two layers having electrically conductive fibres, in particular carbon fibres, placed with alternating fibre orientations within the layers and embedded in a polymer matrix material, and a coating consisting of or comprising magnetically active particles configured to induce a change in physical properties of the coating when exposed to a magnetic field. It is an advantage that the coating comprising magnetically active particles allows for active monitoring of the outer skin of an aircraft. Exposure to a magnetic field induces measurable changes in the physical properties of the coating, such as colour shifts or reflectivity changes, providing a direct and visible indication of potential damage such as cracks or microcracks with in the structure or structural degradation such as delamination of the CFRP layers in the absence of change of physical properties such as lack of change in colour or reflective properties. The invention enables real-time, non-invasive monitoring of the aircraft fuselage without the need for complex external sensors or inspection devices. This reduces maintenance costs and improves operational efficiency. Due to the interaction between the magnetic field and the magnetically active coating, even micro-damages or early-stage material fatigue can be detected before they develop into structural failures. By adjusting the type, size, and concentration of the magnetically active particles in the coating, the sensitivity of the system to structural changes can be tailored for different operational requirements and monitoring conditions. The alternating orientation of the fibre layers and their conductive properties allow for the generation of two distinct magnetic fields when electrical current is applied. This creates a magnetic field distribution and configuration interacting with the coating, resulting in more precise damage localization.

A further aspect of the invention lies in a method for monitoring the structural integrity of the outer skin of an aircraft fuselage or fuselage section, with the steps of activating an electric power source connected to the electrically conductive fibres, in particular carbon fibres in the layers of fibre reinforced plastics, in particular carbon fibre reinforced plastics (CFRP); applying an electric current to the fibres to generate at least one electromagnetic field; inducing a change in physical properties of the magnetically active particles in the coating by the generated electromagnetic field; monitoring the change of the physical properties of the coating; and identifying regions or sections of the outer skin with altered or no change in physical properties of the coating. In a scenario with a crack or several cracks formed in the outer skin, these cracks will disrupt the electric current flowing through the fibres resulting in a breakdown of the magnetic field generated by the current. In consequence, the coating is not exposed to a magnetic field and will hence not change its properties thus indicating the region or section of crack occurrence. If layers of the CFRP-structural element delaminate, the delamination will result in a weakening of the magnetic field resulting in a weaker or anormal change in physical properties that allows for detection of the delaminated regions or sections of the CFRP structure forming the aircraft fuselage or fuselage section. It is an advantage, that the method thus enables continuous and real-time monitoring of the structural integrity of the aircraft fuselage or sections thereof. By applying an electric current to the fibres in the CFRP layers to generate electromagnetic fields, the system can instantly detect changes in the physical properties of the outer skin related to changes in the magnetic field altered by a breakdown or weakening of electric current flowing through the fibres. This ensures immediate identification of damages and the regions or section where damages, such as cracks or delamination of layers, occur. The interaction between the generated electromagnetic fields and the magnetically active particles in the coating allows for the detection of micro-damages or material fatigue at an early stage. This proactive identification helps to prevent failures. Since the method is fully non-invasive and does not require any mechanical contact or destructive procedures, the structural integrity of the entire fuselage is preserved while effective damage detection is enabled. By monitoring changes in the physical properties of the coating, it is an advantage of the method to allow for precise localization of damaged or weakened areas on the aircraft's outer skin. This targeted approach facilitates efficient maintenance and repair processes. The application of an electric current to the fibres in the CFRP layers generates electromagnetic fields that effectively interact with the magnetically active particles in the coating. This interaction results in detectable changes - such as colour shifts or changes in light reflective properties or changes of the structure of the coating - that provides clear indicators of reduced or damaged structural integrity. It is a further advantage that the method utilizes the inherent conductivity of the carbon fibres of the CFRP material for electromagnetic field generation thereby eliminating the need for additional complex hardware. This leads to energy-efficient operation with minimal added system weight.

A further aspect of the invention lies in a use of a coating comprising magnetically active particles configured to induce a change in physical properties of the coating when exposed to a magnetic field in a structural integrity monitoring method in an aircraft fuselage or fuselage section. As an advantage the magnetically active coating is designed to exhibit a change in physical properties - such as colour, texture, or reflectivity - when exposed to a magnetic field which enables immediate and easily detectable visual indications of structural integrity or - in case of damages such as cracks or delamination- indication of the effected regions or sections of the CFRP-structure by missing change in physical properties, such as non-occurrence of colour changes in the regions affected by damages. This simplifies damage assessment without the need for complex monitoring systems such as sensor or visual inspection devices. As a further advantage, the coating allows for non-invasive, real-time monitoring of the aircraft structure. It eliminates the need for embedded sensors or manual inspections, reducing maintenance complexity and ensuring continuous structural health or integrity surveillance during operation. The interaction between the electromagnetic field and the magnetically active particles enables the early detection of micro-cracks, delamination, or other forms of material fatigue that result in a breakdown of the magnetic field and hence non-activation of the magnetically active particles. Furthermore, it is an advantage that the coating can be uniformly applied across large and complex surfaces of the aircraft fuselage, ensuring consistent and comprehensive monitoring of the entire structure. This broad coverage reduces the risk of undetected localized damage. As part of the outer skin, the coating adds minimal weight to the aircraft and can be seamlessly integrated into existing manufacturing and maintenance processes without the need for significant structural modifications.

A further aspect of the invention lies in an aircraft having a fuselage or fuselage section provided with an outer skin according to the invention. As an advantage the aircraft benefits from continuous and precise monitoring of the structural integrity of its fuselage. The outer skin with magnetically active coating and conductive carbon fibre layers enables the early detection and identification of damages such as micro-cracks, delamination, and other material degradations due to absence of change in physical properties. The embedded monitoring capability eliminates the need for frequent manual inspections or supports the inspection during on ground maintenance operations resulting in fewer maintenance interventions and shorter downtimes. Since the system integrates directly into the fuselage structure it does not add significant weight to the entire aircraft structure.

Advantageous embodiments and further developments are apparent from the further dependent claims and from the description with reference to the figures.

According to an embodiment of the invention the change in physical properties comprises a change in colour, texture and/or reflective properties of the coating. It is an advantage of the outer skin according to the invention, that changes in colour, texture, or reflectivity or the absence of change provide a direct and easily recognizable visual indication of structural damage or stress. This allows to quickly identify and localize affected areas without requiring specialized equipment during maintenance operations. The properties of the coating and changes induced by a magnetic field enable real-time monitoring of the structural integrity of the aircraft and allows for instant detection of damage during ground inspections. The visible changes or the absence thereof in the properties of the coating simplify routine inspections by eliminating the need for extensive manual testing or diagnostic tools. This reduces inspection times and associated costs. Subtle physical changes, such as slight colour shifts or texture variations, can reveal early-stage micro-cracks or material fatigue. It is an advantage that early detection of such damage allows for timely intervention and prevents further delamination or propagation of cracks. It is a further advantage, that the coating can cover large surface areas, providing uniform and comprehensive monitoring of the entire fuselage. This wide-area coverage avoids overlooking of localized damage.

According to a further embodiment of the invention, each layer comprises unidirectionally orientated fibres, wherein the fibre orientation in the layers alternates in an angular range of between 45° to 90°. The alternating orientation of the electrically conductive carbon fibres allows for the generation of distinct electromagnetic fields when an electric current is applied. By monitoring the overlapping of magnetic fields the breakdown or decrease in intensity in case of damages such as cracks or delamination ensures a more precise and clearer delimited damage detection. The fibre orientation variability enhances the responsiveness of the system to structural anomalies. This configuration allows the electromagnetic fields to interact with potential flaws or defects more effectively, improving detection sensitivity and damage indication. In summary the alternating fibre orientations create multiple magnetic field vectors when current is applied, allowing more comprehensive interaction with the magnetically active coating and enabling precise localization of damage in the absence of changes.

According to a further embodiment of the invention the magnetic particles are configured as magnetic nanoparticles consisting of iron oxide, nickel, or cobalt.

It is an advantage that magnetic nanoparticles composed of iron oxide, nickel, or cobalt exhibit strong magnetic properties, leading to a more pronounced and reliable response to externally applied electromagnetic fields. This improves the sensitivity and accuracy of damage detection. Due to their nanoscale size, magnetic nanoparticles provide a high surface area-to-volume ratio, enabling more efficient interaction with electromagnetic fields. This advantageously results in quicker and more detectable changes or absence of changes in the physical properties of the coating when structural anomalies occur. The strong magnetic characteristics of iron oxide, nickel, and cobalt nanoparticles enhance the ability of the coating to detect even minimal changes in the structure. This allows for the early identification of micro-damage and material fatigue before they progress. Iron oxide, nickel, and cobalt nanoparticles offer excellent magnetic stability over time and under varying environmental conditions. This ensures long-term, consistent performance of the monitoring system, even in extreme operational environments. The high magnetic susceptibility of these nanoparticles allows for efficient induction of physical property changes (e.g., colour, texture, reflectivity) in the coating when exposed to magnetic fields, enabling clear and immediate visual or measurable indicators of structural integrity or damage. By selecting specific materials such as iron oxide for high chemical stability, nickel for enhanced magnetic permeability, or cobalt for high magnetic saturation, the magnetic behaviour of the coating can be tailored to meet specific performance requirements while the use of nanoparticles has the advantage that the coating remains lightweight while providing comprehensive structural health monitoring.

According to a further embodiment of the invention the fibres are provided with an electrically insulating coating. The electrically insulating coating has the advantage of preventing unintended electrical short circuits between adjacent fibres. This ensures controlled and directed current flow, improving the efficiency and reliability of electromagnetic field generation. By electrically isolating individual fibres, the coating allows for precise control over the distribution of electric current. This advantageously leads to more uniform and stable electromagnetic fields, enhancing the interaction with the magnetically active coating for accurate damage detection. Electrical insulation furthermore reduces the risk of overheating or electrical faults within the carbon fibre layers, thereby improving the overall safety of the structural health monitoring system, whereas the insulation also prevents electromagnetic interference between fibres, ensuring cleaner signals and more accurate induction of changes in the physical properties of the coating. Electrical insulation also minimizes energy losses by preventing leakage currents, ensuring that the applied electrical power is efficiently used for generating the required electromagnetic fields. As a further benefit, the insulated fibres can be selectively activated, enabling the generation of localized magnetic fields for focused monitoring of specific fuselage sections. This improves damage localization. In multi-layered fibre structures with alternating orientations, the insulation advantageously reduces crosstalk between layers. This ensures independent operation of each layer, leading to clearer and more reliable monitoring results. The insulating coating can be applied during the fibre manufacturing process, allowing for seamless integration into existing composite production workflows without significant changes to manufacturing complexity.

According to a further embodiment of the invention the fibres are configured for connection with an electric power source. Direct connection of the fibres to an electric power source enables the generation of controllable electromagnetic fields within the composite structure. This active monitoring system allows for real-time detection of structural damage or material degradation. The conductive fibres can efficiently generate localized or distributed electromagnetic fields when powered, enhancing the interaction with magnetically active coatings for more precise and sensitive damage detection. By utilizing the fibres themselves as conductors, the system eliminates the need for complex wiring, thus simplifying the structural design and reducing weight of the entire structure. The ability to directly power the fibres allows for fine-tuned control over the intensity and distribution of electromagnetic fields, resulting in improved sensitivity to micro-cracks, delamination, and material fatigue. As a further advantage the configuration allows for scalable integration across different aircraft structures. As such power can be supplied to specific sections or distributed uniformly, offering flexibility in monitoring various parts of the fuselage. Furthermore, the fibres can be seamlessly connected to the existing electrical systems of the aircraft, reducing the need for additional components and simplifying maintenance and integration. The direct electrical connection can also enable continuous data acquisition, allowing for real-time analysis and immediate response to detected anomalies, improving aircraft safety, and reducing maintenance response times.

According to a further embodiment of the invention the coating is configured to react to a magnetic field generated by applying current to the fibres with changing the physical properties of the coating, in particular changing the colour or light reflection of a surface or surface area of the coating. As an advantage the change or absence of the change in colour or light reflection of the coating provides an immediate and easily visible indication of structural damage or stress. This allows for rapid identification of affected areas without the need for specialized diagnostic tools or complex sensor systems. The system thus enables continuous, real-time monitoring of the aircraft structure during operation and maintenance with the instantaneous feedback allowing for the prompt detection of structural changes or damage. Subtle changes in the colour or reflectivity can reveal early-stage micro-cracks, delamination, or material fatigue before they develop into structural issues. Early detection supports proactive maintenance and extends the lifespan of the aircraft. The visible reaction of the coating advantageously streamlines inspection routines by providing clear indicators of structural integrity. As a benefit maintenance personnel can quickly assess damage visually, reducing inspection times and associated costs. Since the coating can be uniformly applied over large and complex surfaces of the aircraft fuselage, comprehensive and continuous monitoring of the entire structure without blind spots is enabled.

According to a further embodiment of the method, each layer comprises unidirectionally orientated fibres with a fibre orientation alternating in an angular range of between 45° to 90°, wherein electric current is applied simultaneously or alternating to the fibres with-in each layer and wherein the step of monitoring the change of the physical properties of the coating comprises simultaneously or alternatingly monitoring the change in the layers and identifying regions or sections with overlaying changes. As an advantage the application of electric current simultaneously or alternately to the fibre layers allows for more precise detection of structural anomalies. Overlapping changes in physical properties across multiple layers provide a clearer indication of damage location and severity. The alternating fibre orientations between 45° and 90° thereby enable multidirectional monitoring, allowing the system to accurately pinpoint damage in complex conditions. Overlapping signals from different layers enhance spatial resolution. Simultaneous or alternating activation and monitoring enable the system to distinguish between surface-level and deeper internal damage. This layered approach advantageously improves diagnostic capabilities by identifying the depth and progression of structural defects. The alternating monitoring of layers increases sensitivity to small cracks or early-stage material fatigue and propagation, orientation and size of the damage or damaged region. Detecting subtle and overlapping changes allows for early intervention before damage escalates. Alternating fibre orientations combined with controlled current application result in uniform and targeted electromagnetic field generation. This optimized field distribution enhances the interaction with magnetically active coatings, improving detection accuracy. Monitoring for overlapping changes in multiple layers minimizes false alarms. Only consistent changes detected across different layers trigger alerts, improving the reliability of the system. The combination of multi-angled fibre orientation and layered monitoring ensures that damages resulting from stress from various directions and loading scenarios is effectively captured.

According to a further embodiment the method the change of physical properties comprises at least one of a change in colour, texture, and reflective properties of the coating. As an advantage changes in colour, texture, or reflectivity or absence thereof provide a clear and easily recognizable visual indication of structural damage or stress. This enables quick identification of compromised areas without requiring specialized diagnostic tools or technical expertise. The coating passively responds to changes in the structure without the need for embedded sensors or electronic components. This ensures monitoring without interfering with the mechanical integrity of the aircraft. As the physical property changes occur in real-time after application of electric current and formation of the electric filed this allows for immediate detection of structural changes or damage during operation or maintenance in the case of an absence of a change. Subtle changes in colour, texture, or reflectivity can indicate early-stage material fatigue, micro-cracks, or delamination. Detecting such minor defects early prevents their progression. The visible or tangible change in physical properties allows maintenance personnel to quickly locate and assess damage in case of absence of change. This reduces the need for complex inspection equipment and shortens maintenance times. As the coating can be uniformly applied across large and complex fuselage surfaces, comprehensive monitoring without blind spots is ensured. This can provide more effective coverage than traditional point-based sensor systems. The coating has the further advantage to add minimal weight to the aircraft and to integrate seamlessly with existing fuselage structures.

According to a further embodiment the method the electromagnetic field extends over the entire outer skin or sections thereof. As an advantage this embodiment ensures complete and uniform monitoring of the surface. This minimizes the risk of undetected damage in areas that are traditionally difficult to inspect. The ability to apply the electromagnetic field to specific sections only allows for focused monitoring of high-stress or high-risk regions, such as joints, seams, or impact-prone zones and hence optimizes monitoring efficiency. Furthermore, the system can be easily scaled to monitor either the entire fuselage or designated sections depending on operational requirements. This flexibility supports both comprehensive and localized structural health or integrity assessments as well as damage detection. A widespread electromagnetic field improves interaction with the magnetically active coating, advantageously resulting in more sensitive and accurate detection of micro-cracks, delamination, and other structural defects in the entire surface or fuselage.

According to a further embodiment of the method the step of monitoring the change in physical properties of the coating comprises at least one of visual inspection and sensor-based inspection. Visual inspection offers the benefit of providing a low-cost and straightforward method for identifying damage, reducing the need for expensive diagnostic equipment thus minimizing maintenance costs and inspection time. In contrast thereto sensor-based inspection provides high precision and sensitivity in detecting subtle changes in physical properties (e.g., colour, texture, reflectivity), enabling the detection of micro-damages or early-stage material fatigue that might not be visible to the naked eye. Visual inspection allows maintenance personnel to instantly identify visible damage, facilitating rapid assessments without specialized training or equipment, whereas sensor-based systems can continuously and automatically monitor the physical properties of the coating in real-time, providing immediate feedback on structural integrity during operation. The dual approach offers the advantage of ensuring thorough inspection coverage wherein while visual inspection is ideal for surface-level damage, sensor-based inspection can detect deeper or hidden defects, offering a more comprehensive structural evaluation. As a further advantage sensor-based data acquisition can be integrated into predictive maintenance systems, allowing for data-driven decisions and optimized maintenance scheduling based on actual structural conditions. In summary, combining visual and sensor-based inspections increases the likelihood of detecting damage early, significantly enhancing the safety and operational reliability of the aircraft.

According to a further embodiment of the method the step of identifying regions or sections of the outer skin with altered physical properties of the coating comprises an evaluation of structural integrity of the outer skin or sections thereof. By evaluating the structural integrity of the outer skin based on detected changes, this embodiment of the method provides a complete and accurate assessment of the structural condition of the aircraft, ensuring a higher level of operational safety. The evaluation process enables early identification of minor defects, such as micro-cracks or delamination, allowing for timely maintenance and repair. The ability to assess and localize compromised areas advantageously enables maintenance teams to focus on specific regions that require attention. This targeted approach reduces unnecessary repairs and optimizes resource allocation. The evaluation process can generate detailed data on the condition of specific fuselage sections, supporting predictive maintenance strategies and enabling data-driven decision-making for maintenance planning. The evaluation of physical changes in the coating properties provides quantifiable data on structural health, reducing subjective interpretation and enabling objective analysis.

The invention will be explained in greater detail with reference to exemplary embodiments depicted in the drawings as appended.
- Fig. 1: illustrates a perspective view of a section of a coating comprising magnetically active particles for use in an outer skin according to an embodiment of the invention;
- Fig. 2: illustrates a perspective view of a section of a coating comprising magnetically active particles for use in an outer skin according to an embodiment of the invention;
- Fig. 3: schematically depicts a single carbon fibre within a carbon fibre reinforced plastics (CFRP) structure in an outer skin according to an embodiment of the invention;
- Fig. 4: schematically depicts a single carbon fibre within a carbon fibre reinforced plastics (CFRP) structure in an outer skin according to an embodiment of the invention,
- Fig. 5a, b: depict sections of a fuselage outer skin structure according to an embodiment of the invention;
- Fig. 6a, b: depict perspective views of sections of a fuselage outer skin structure according to an embodiment of the invention;
- Fig. 7a, b: depict perspective views of sections of a fuselage outer skin structure according to an embodiment of the invention;
- Fig. 8a, b: depict top views of sections of a fuselage outer skin structure according to an embodiment of the invention;
- Fig. 9a, b: depict side sectional views of sections of a fuselage outer skin structure according to an embodiment of the invention;
- Fig. 10a, b: depict perspective views of sections of a fuselage outer skin structure according to an embodiment of the invention; and
- Fig. 11: shows a flow diagram of a method for monitoring the structural integrity of the outer skin of an aircraft fuselage or fuselage section according to an embodiment of the invention.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

In the figures of the drawings, identical elements, features, and components that have the same function, and the same effect are each given the same reference signs, unless otherwise specified.

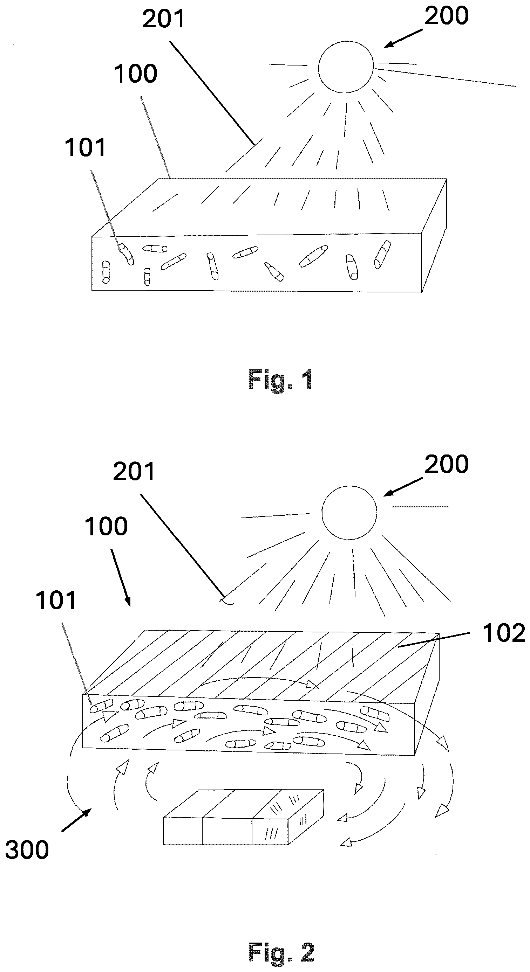

Fig. 1 illustrates a schematic representation of a section of a coating 100 comprising magnetically active particles 101 in a state without an applied magnetic field. The coating 100 is exposed to light 200, represented by incident light rays 201. In this state, the magnetically active particles 101 are randomly oriented within the coating 100, showing no organized alignment due to the absence of an external magnetic field. As a result, no change in colour or reflective properties of the coating 100 occurs.

Fig. 2 illustrates a schematic representation of the coating 100 of Fig. 1 comprising magnetically active particles 101 in a state with an applied magnetic field 300. The coating 100 is exposed to light 200, represented by incident light rays 201. Due to the applied magnetic field 300, the magnetically active particles 101 align along the magnetic field lines within the coating 100. This alignment of the particles 101 causes a change in the physical properties of the coating 100, particularly resulting in a visible change in colour or reflective properties of the coating surface 102.

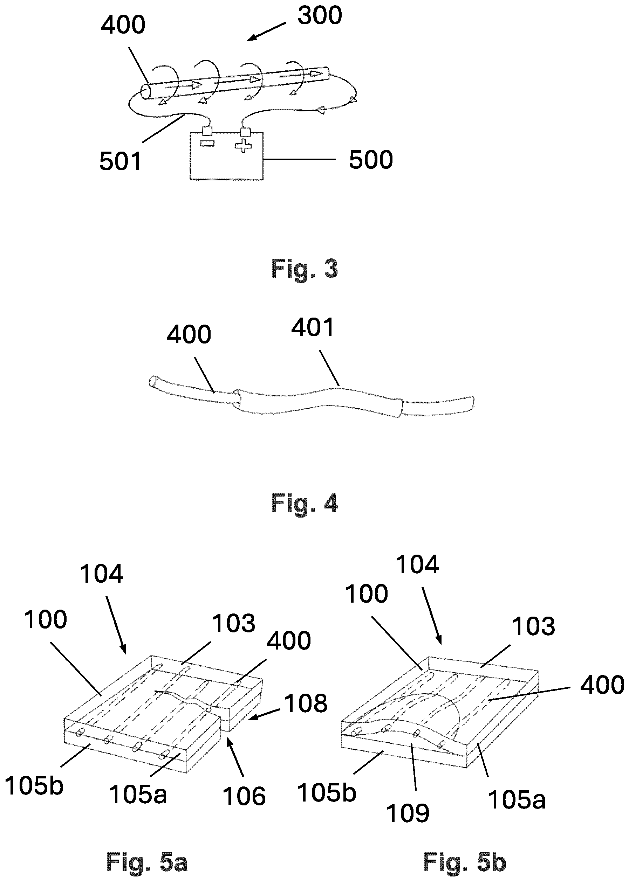

Fig. 3 illustrates a schematic representation of a single carbon fibre 400 within a carbon fibre reinforced plastics (CFRP) structure. The carbon fibre 400 is connected to an electric power source 500 via electrical connection lines 501. Upon applying an electric current through the carbon fibre 400, an electromagnetic field 300 is generated around the fibre 400. The formation and direction of the electromagnetic field 300 follow the right-hand rule, meaning that if the right hand is used with the thumb pointing in the direction of the electric current flow through the fibre 400, the curled fingers indicate the direction of the circular electromagnetic field 300 around the fibre 400. In connection with the present invention this generated electromagnetic field 300 can interact with magnetically active coatings 100 or particles 101 in the surrounding structure, enabling structural health monitoring through changes in physical properties such as colour or reflectivity.

Figs. 4 illustrates a schematic representation of a single carbon fibre 400 provided with an electrically insulating coating 401. The insulating coating 401 surrounds the carbon fibre 400, effectively preventing short circuits between adjacent fibres 400 in a carbon fibre reinforced plastics (CFRP) structure. This insulation ensures controlled and directed current flow through the fibre 400, thereby stabilizing the formation of a consistent and uniform electromagnetic field 300 around the fibre 400 when an electric current is applied. The stabilized electromagnetic field 300 enhances the interaction with magnetically active coatings 100 or particles 101, improving the accuracy and reliability of structural health monitoring.

Fig. 5a illustrates a section 103 of a fuselage outer skin structure 104 comprising carbon fibre layers 105a, 105b. A crack 106 has formed within the structure 104, resulting in the severing of one or more carbon fibres 400. This interruption causes a breakdown in the electric current flow through the affected fibres 400, leading to a disruption in the generation of the electromagnetic field 300. The absence of the magnetic field 300 in the damaged area 108 allows for the identification and localization of the structural defect due to the absence of changes in the physical properties of the coating 100.

Fig. 5b depicts a section 103 of the fuselage outer skin structure 104 experiencing delamination 109 between the carbon fibre layers 105a, 105b. Although the fibres 400 remain physically intact, the separation of the layers 105a, 105b weakens the electromagnetic field 300 generated by the electric current flowing through the fibres 400. This weakening of the electromagnetic field 300 leads to detectable alterations in magnetic field strength, allowing for the identification of delamination 109 and internal structural degradation within the composite material due to weaker or absent changes in the physical properties of the coating 100.

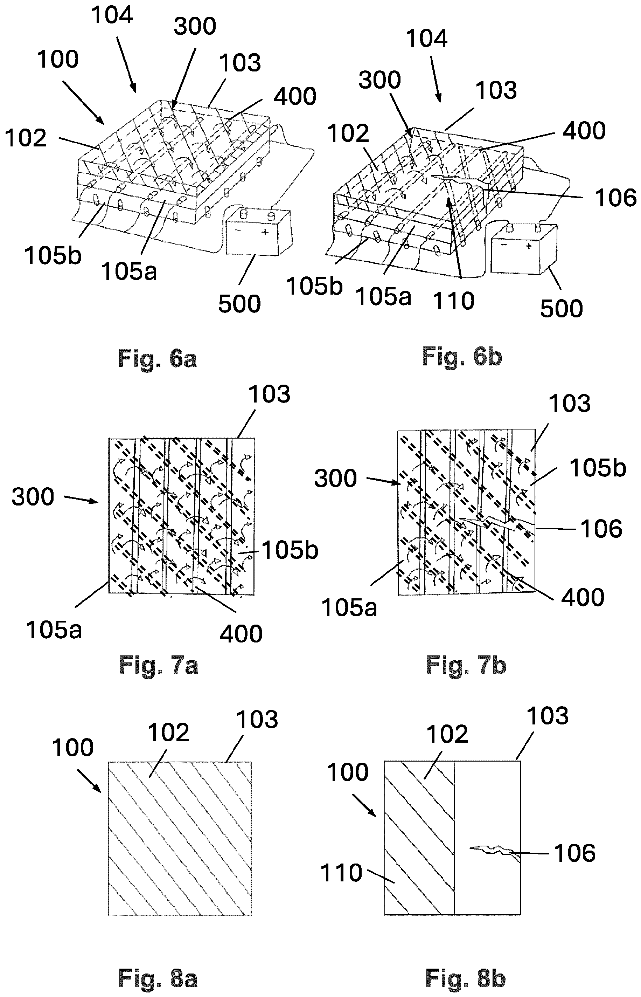

Fig. 6a illustrates an intact section 103 of a fuselage outer skin structure 104 comprising carbon fibre layers 105a, 105b, having electrically conductive fibres 400. An electric power source 500 applies an electric current through the fibres 400, generating a uniform electromagnetic field 300 across the structure. This uniform electromagnetic field 300 interacts with the magnetically active coating 100, resulting in a consistent and uniform colour change across the coating surface 102, indicating the absence of any structural damage.

Fig. 6b depicts a damaged section 103 of the fuselage outer skin structure 104 where a crack 106 has formed, severing one or more carbon fibres 400 within the carbon fibre layers 105a, 105b. This disruption breaks the electric current flow, leading to a localized breakdown of the electromagnetic field 300 in the affected area 110. As a result, the magnetically active coating 100 does not exhibit a colour change in the region adjacent to the crack 106, while the unaffected regions still show the expected colour change when the electromagnetic field 300 is applied. This contrast allows for the clear identification and localization of the structural defect.

Fig. 7a presents a top view of the intact fuselage section 103 shown in Fig. 6a, illustrating the arrangement of carbon fibre layers 105a, 105b with alternating fibre orientations. The fibres 400 of the first layer 105a and the second layer 105b are oriented at different angles, resulting in distinct but uniformly distributed electromagnetic fields 300 when electric current is applied. This alternating fibre orientation ensures a homogeneous electromagnetic field 300 distribution across the entire structure104, enabling consistent interaction with the magnetically active coating 100 and resulting in a uniform colour change.

Fig. 7b shows a top view of the damaged fuselage section 103 of Fig. 6b, where a crack 106 disrupts the continuity of the carbon fibre layers 105a, 105b. The damage interrupts the electric current flow and disturbs the electromagnetic fields 300 in the affected region. Due to the alternating fibre orientations in the layers 105a, 105b, the disruption is more pronounced and localized, making it easier to identify the damaged area. This interruption results in an incomplete or absent electromagnetic field 300 in the vicinity of the crack 106, preventing the magnetically active coating 100 from undergoing the expected colour change. The electromagnetic field 300 distribution altered in two distinct directions caused by the disrupted fibres 400 allows for a two-dimensional detection and localization of the structural damage, i.e. crack 106.

Fig 8a presents a top view of an intact section 103 of a carbon fibre reinforced plastics (CFRP) structure 104. The magnetically active coating 100 shows a uniform colour change across the entire surface 102 due to the consistent and uninterrupted electromagnetic field 300 generated by the alternating fibre orientations in the layers 105a, 105b. This homogenous colour change confirms the structural integrity of the section 103, indicating that no damage is present and that the electric current flows uniformly through the fibres 400.

Fig. 8b shows a top view of a damaged CFRP section 103 with a visible crack 106 disrupting the structure 104. The crack 106 interrupts the electric current flow in the carbon fibres 400, causing a localized breakdown of the electromagnetic field 300. This disruption results in distinct, uneven shading in the magnetically active coating 100. The respective regions display altered colour patterns, while the unaffected area 110 shows no colour change. The contrast in shading enables precise localization of the crack 106 and reveals the direction of its propagation within the CFRP structure. The alternating fibre orientations in the layers 105a, b enhance damage visualization by creating distinguishable colour gradients, providing clear and accurate detection of structural defects.

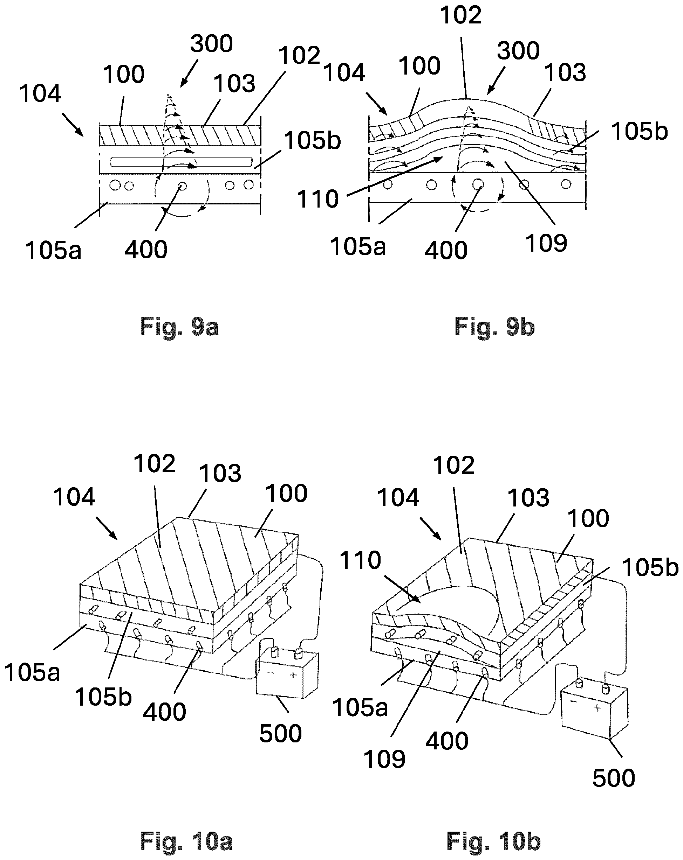

Fig. 9a illustrates a sectional view of an intact fuselage section 103 comprising multiple carbon fibre reinforced plastics (CFRP) layers 105a, 105b. The structure 104 includes a magnetically active coating 100, upper carbon fibre layer 105a, and lower carbon fibre layer 105b. The carbon fibres 400 allow an electric current to flow uninterrupted through the fibres 400 of the layers 105a, 105b. This electric current generates a stable and uniform electromagnetic field 300, which interacts effectively with the magnetically active coating 100, leading to consistent physical property changes (e.g., colour change) across the coating surface 102, indicating structural integrity.

Fig 9b presents a sectional view of a fuselage section 103 experiencing delamination 109 between the CFRP layers 105a, 105b. The partial separation between the upper layer 105a and the lower layer 105b causes distortion and weakening of the magnetic field 300 in the affected area. This weakened or altered electromagnetic field 300 results in an inconsistent or absent response in the magnetically active coating 100, which fails to exhibit the expected physical property change or exhibits a weaker change, only. This disruption allows for clear identification and localization of the delamination 109, supporting detection and subsequent repair in the affected area 110.

Fig. 10a illustrates a perspective view of an intact fuselage section 103, corresponding to the sectional view shown in Fig. 9a. The structure 104 comprises a magnetically active coating 100 applied over carbon fibre reinforced plastics (CFRP) layers 105a, 105b, including an upper carbon fibre layer 105a and a lower carbon fibre layer 105b. An electric power source 500 supplies current through the conductive fibres 400 in the CFRP layers, generating a stable and uniform electromagnetic field 300. This electromagnetic field 300 effectively interacts with the magnetically active coating 100, resulting in a consistent and uniform colour change across the surface 102 of the section, indicating the absence of structural damage.

Fig. 10b presents a perspective view of a fuselage section 103 experiencing delamination 109, corresponding to the sectional view in Fig. 9b. In the damaged, i. e. delaminated region, the separation between the CFRP layers 105a, 105b weakens the electromagnetic field 300. The increased distance between the magnetically active coating 100 and the electrically conductive fibres 400 reduces the effectiveness of the electromagnetic field 300. Consequently, the coating 100 displays an irregular colour change, with the affected area 110 showing little or no colour alteration, while the surrounding intact regions exhibit the expected uniform colour change. This distinct contrast in the appearance of the coating 100 allows for precise identification and localization of the delamination 109.

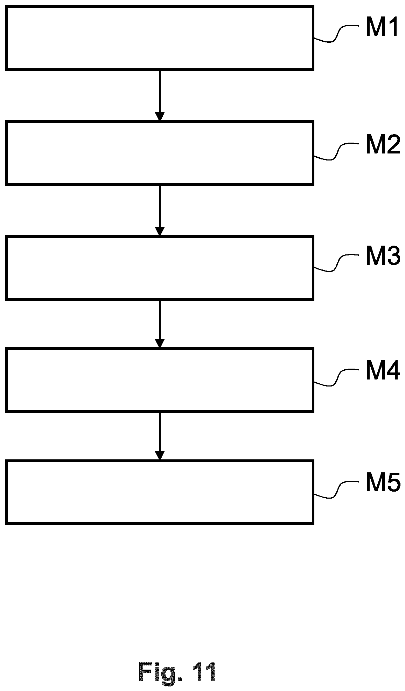

Fig. 11 shows a flow diagram of a method for monitoring the structural integrity of the outer skin of an aircraft fuselage or fuselage section according to an embodiment of the invention. In a first step M1 an electric power source 500 connected to the carbon fibres 400 in the layers 105a, 105b of carbon fibre reinforced plastics (CFRP) is activated thereby applying in a second step M2 an electric current to the fibres 400 to generate at least one electromagnetic field 300. In step M3 the electromagnetic field 300 induces a change in physical properties of the magnetically active particles 101 which allows in step M4 to monitor the change of the physical properties and to identify in step M5 regions or sections 103 of the outer skin with altered physical properties due to an altered electromagnetic field 300 in a scenario with a crack 106 or several cracks 106 formed in the outer skin as these cracks 106 will disrupt the electric current flowing through the fibres 400 and resulting in a breakdown of the electromagnetic field 300 generated by the current. Since in consequence of this breakdown the coating 100 is not exposed to an electromagnetic field 300 it will not change its properties and thus indicates the region or section 103 of crack 106 occurrence.

In the foregoing detailed description, various features are grouped together in one or more examples or examples with the purpose of streamlining the disclosure. It is to be understood that the above description is intended to be illustrative, and not restrictive. It is intended to cover all alternatives, modifications, and equivalents. Many other examples will be apparent to one skilled in the art upon reviewing the above specification. The embodiments were chosen and described to best explain the principles of the invention and its practical applications, to thereby enable others skilled in the art to best utilize the invention and various embodiments with various modifications as are suited to the particular use contemplated.

### List of reference signs

- 100: coating
- 101: particle
- 102: surface
- 103: section
- 104: structure
- 105a, b: layer
- 106: crack
- 108: damaged area
- 109: delamination
- 110: area
- 200: light
- 201: ray
- 300: magnetic / electromagnetic field
- 400: carbon fibre/fibre
- 401: insulating coating
- 500: power source
- 501: electrical connection line
- M1-5: method step

## Claims

1. Outer skin of an aircraft fuselage or aircraft fuselage section formed from a fibre reinforced plastics, in particular carbon fibre reinforced plastics (CFRP) in a layered configuration, comprising
- at least two layers (105a, b) having electrically conductive fibres (400), in particular carbon fibres, placed with alternating fibre orientations within the layers (105a, b) and embedded in a polymer matrix material, and
- a coating (100) consisting of or comprising magnetically active particles (101) configured to induce a change in physical properties of the coating (100) when exposed to a magnetic field (300).

2. Outer skin according to claim 1, wherein the change in physical properties comprises a change in colour, texture and/or reflective properties of the coating (100).

3. Outer skin according to claim 1 or 2, wherein each layer (105a, b) comprises unidirectionally orientated fibres (400) and wherein the fibre orientation in the layers (105a, b) alternates in an angular range of between 45° to 90°.

4. Outer skin according to any of claims 1 to 3, wherein the magnetic particles (101) are configured as magnetic nanoparticles consisting of iron oxide, nickel, or cobalt.

5. Outer skin according to any of claims 1 to 4, wherein the fibres (400) are provided with an electrically insulating coating.

6. Outer skin according to any of claims 1 to 5, wherein the fibres (400) are configured for connection with an electric power source (500).

7. Outer skin according to any of claims 1 to 6, wherein the coating (100) is configured to react to a magnetic field (300) generated by applying electric current to the fibres (400) with changing the physical properties of the coating (100), in particular changing the colour or light reflection of a surface (102) or surface area (110) of the coating (100).

8. Method for monitoring the structural integrity of the outer skin of an aircraft fuselage or fuselage section according to any of claims 1 to 7, comprising:
- activating an electric power source (500) connected to the electrically conductive fibres (400), in particular carbon fibres, in the layers (105a, b) of fibre reinforced plastic, in particular carbon fibre reinforced plastics (CFRP);
- applying an electric current to the fibres (400) to generate at least one magnetic field (300);
- inducing a change in physical properties of the magnetically active particles (101) in the coating (100) by the generated magnetic field (300);
- monitoring the change of the physical properties of the coating (100); and
- identifying regions or sections (103) of the outer skin with altered physical properties in the coating (100).

9. Method according to claim 8, wherein each layer (105a, b) comprises unidirectionally orientated fibres (400) with a fibre orientation alternating in an angular range of between 45° to 90°, wherein electric current is applied simultaneously or alternating to the fibres (400) within each layer (105a, b) and wherein the step of monitoring the change of the physical properties of the coating (100) comprises simultaneously or alternatingly monitoring the change in the layers (105a, b) and identifying regions or sections (103) with overlaying changes.

10. Method according to any of claims 8 or 9, wherein the change of physical properties comprises at least one of a change in colour, texture, and reflective properties of the coating (100).

11. Method according to any of claims 8 to 10, wherein the magnetic field (300) extends over then entire outer skin or sections (103) thereof.

12. Method according to any of claims 8 to 11, wherein monitoring the change in physical properties of the coating (100) comprises at least one of visual inspection and sensor-based inspection.

13. Method according to any of claims 8 to 12 wherein identifying regions or sections (103) of the outer skin with altered physical properties of the coating (100) comprises an evaluation of structural integrity of the outer skin or sections (103) thereof.

14. Use of a coating (100) comprising magnetically active particles (101) configured to induce a change in physical properties of the coating (100) when exposed to a magnetic field (300) in a structural integrity monitoring method in an aircraft fuselage or fuselage section.

15. Aircraft having a fuselage or fuselage section provided with an outer skin according to any of claims 1 to 7.
